# EUROPEAN PATENT SPECIFICATION

(11) **EP 0 572 189 B1**
(45) Date of publication and mention of the grant of the patent: **12.03.1997**
(21) Application number: 93303981.0
(22) Date of filing: 21.05.1993
(51) Int. Cl.: H04M 1/72, H02J 7/00, H04B 1/38

(54) **Battery charging equipment for a cordless telephone**
Batterieladegerät für ein schnurloses Telefon
Chargeur de batterie pour un téléphone sans fil

(30) Priority: 26.05.1992 JP 133242/92
(43) Date of publication of application: 01.12.1993
(73) Proprietor: MATSUSHITA ELECTRIC INDUSTRIAL CO., LTD., Kadoma-shi, Osaka-fu, 571 (JP)
(72) Inventor: Iida, Shinobu, Shinagawa-ku, Tokyo (JP)
(74) Representative: Sorrell, Terence Gordon

(56) References cited:
- EP-A- 0 150 376
- DE-A- 2 702 129
- US-A- 4 558 270
- US-A- 5 046 131
- MOTOROLA/TECHNICAL DEVELOPMENTS vol. 8, no. 1, October 1988, SCHAUMBURG US page 73 SIWIAK ET AL 'ACCESSORY ADAPTER AND SECURITY CRADLE FOR PORTABLE RADIOS'
- PATENT ABSTRACTS OF JAPAN vol. 14, no. 493 (E-995)26 October 1990 & JP-A-22 03 648

## Description

The present invention relates to a charging device for a portable apparatus containing an electric cell pack such as a cordless telephone.

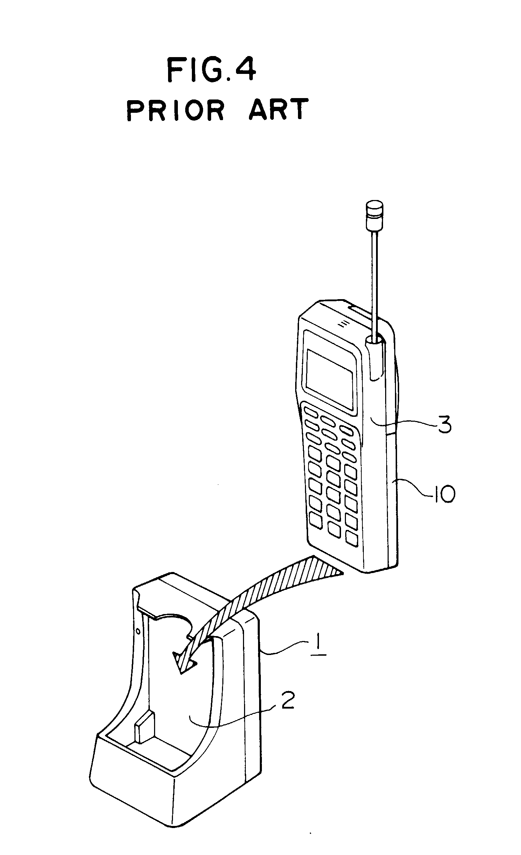

For example, when a cordless telephone 3, containing, as shown in Fig. 4, a separable secondary cell pack 10, is to be charged, the telephone 3 containing the cell pack 10 is moved in a direction indicated by an arrow in Fig. 4 to be received in a charging portion 2 of the charging device 1, and the cell pack in the cordless telephone is electrically charged.

However, although a conventional charging device such as the one mentioned above is able to electrically charge a portable apparatus equipped with an electric cell pack when positioned in the charging portion thereof, it is not possible with the device to charge a simple spare cell pack separated from the portable apparatus.

EP-A-0150376 discloses a charging device for charging a portable apparatus containing a separable cell pack therein. The charging device comprises: a portable apparatus charging portion including charging terminals which receives said portable apparatus containing a separable cell pack for charging said cell pack; and a simple cell pack charging portion including charging terminals which receives a simple cell pack separated from an apparatus body for charging said simple cell pack.

The present invention is characterised over the device of EP-A-0150376 in that the charging terminals of the portable apparatus charging portion and the charging terminals of the simple cell pack charging portion are located in a charging base portion of the charging device, and are arranged in the same plane.

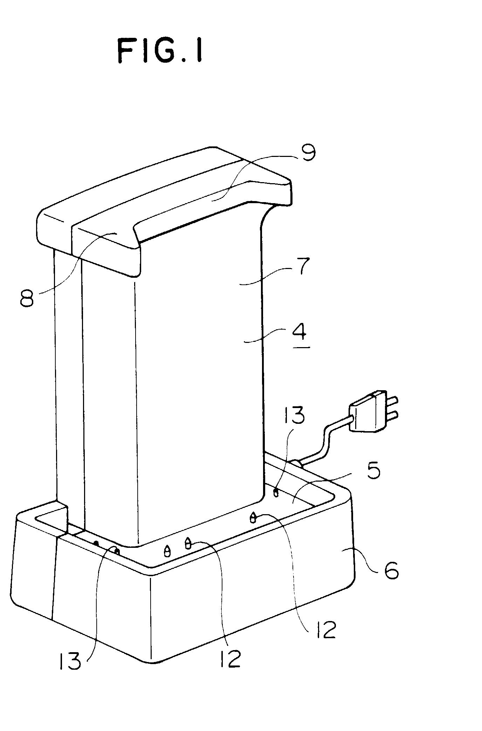

The foregoing and further features of the present invention will be more readily understood from the following description of a preferred embodiment with reference to the drawings, of which:-
Fig. 1 is a perspective view of a charging device according to the present invention,
Fig. 2 is a perspective view of a charging device according to the present invention mounting a cordless telephone containing a cell pack,
Fig. 3 is a perspective view of a charging device according to the present invention mounting a simple cell pack separated from a portable apparatus body, and
Fig. 4 is a combination of a perspective view of a cordless telephone containing a secondary cell pack and a perspective view of a conventional charging device.

The present invention will now be described by referring to an embodiment which is used for charging a cordless telephone. A charging device 4 according to the present invention comprises a charging base portion 6 formed with a substantially U-shaped recess portion 5 and a square pillar portion 7 projecting upwards from and perpendicularly to the recess portion 5. The square pillar portion 7 has, at an upper portion thereof, a flange 8 having a cut-out 9 at a front portion thereof.

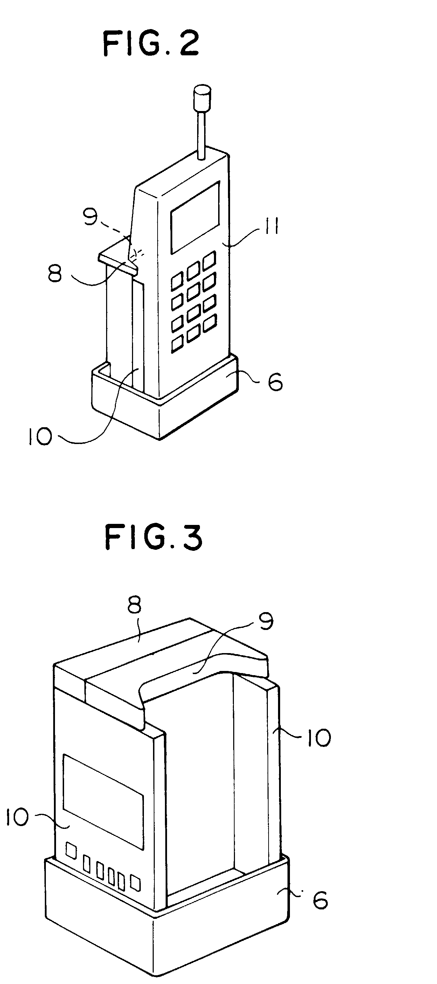

When a cordless telephone containing a secondary cell pack 10 or a simple secondary cell pack 10 separated from the telephone body is to be charged, the cordless telephone 11 containing the secondary cell pack 10 or the simple secondary cell pack 10 is mounted on the recess portion 5 of the charging base portion 6 as shown in Fig. 2 and Fig. 3, respectively.

In detail, the cordless telephone charging portion is constituted by the cut-out portion 9 formed at the front portion of the flange 8, the front portion of the square pillar portion 7 and the front portion of the charging base portion 6.

The cell pack charging portion is constituted by the left and right side portions of the flange 8, the left and right side surfaces of the square pillar portion 7 and the left and right portions of the charging base portion 6. In the recess portion 5 of the charging base portion 6 are arranged charging terminals 12 for the cordless telephone and charging terminals 13 for the secondary cell pack.

Consequently, when a cordless telephone 11 containing a secondary cell pack 10 is intended to be charged, the cordless telephone 11 is disposed, as shown in fig. 2, against the cut-out portion 9, the front portion of the square pillar portion 7 and the front portion of the charging base portion 6, whereby the bottoms of the secondary pack 10 and the cordless telephone body 11 are received in the recess portion 5 of the charging base portion 6 with the terminals of the secondary cell pack 10 contacting with the charging terminals 12.

On the other hand, when a simple secondary cell pack 10 is intended to be charged, the secondary pack 10 is disposed, as shown in Fig. 3, below the left or right portions of the flange 8, whereby the bottom of the secondary cell pack is received in the recess portion 5 of the charging base portion 6 with the terminals of the secondary cell pack 10 contacting with the charging terminals 13 and a charging operation is started.

## Claims

1. A charging device (4) for charging a portable apparatus (11) containing a separable cell pack (10) therein, comprising: a portable apparatus charging portion (6, 7, 8, 9 and 12) including charging terminals (12) which receives said portable apparatus (11) containing a separable cell pack (10) for charging said cell pack (10); and a simple cell pack charging portion (6, 7, 8 and 13) including charging terminals (13) which receives a simple cell pack (10) separated from an apparatus body for charging said simple cell pack; characterised in that the charging terminals (12) of the portable apparatus charging portion (6, 7, 8, 9, 12) and the charging terminals (13) of the simple cell pack charging portion (6, 7, 8, 13) are located in a charging base portion (6) of the charging device (4), and are arranged in the same plane.

2. A charging device (4) as claimed in claim 1, characterised in that it includes two simple cell charging portions (6, 7, 8, 13).

3. A charging device (4) as claimed in claim 2, characterised in that the simple cell charging portions (6, 7, 8, 13) locate one on each side of the portable apparatus charging portion (6, 7, 8, 9, 12).

4. A charging device as claimed in any preceding claim, characterised in that the charging base portion (16) includes a recess portion (5) in which the charging terminals (12, 13) are located and the charging device (4) is arranged such that, when a portable apparatus (11) is received in the portable apparatus charging portion (6, 7, 8, 9, 12), the bottoms of the portable apparatus (11) and its separable cell pack (10) are together received in the charging base portion (6).

5. A charging device (4) according to claim 4, characterised in that the recess portion (5) is U-shaped and said charging equipment includes a square pillar portion (7) projecting upwards from and perpendicularly to said recess portion (5) and formed with a flange (8) at an upper portion of the pillar portion (7),
said flange (8), said square pillar portion (7) and said charging base portion (6) constituting said portable apparatus charging portion (6, 7, 8, 9, and 12) and said simple cell pack charging portion (6, 7,8 and 13).

## Patentansprüche

1. Ein Ladegerät (4) zum Aufladen eines tragbaren Apparates (11) , der eine herausnehmbare Akkumulatorbatterie (10) beinhaltet und folgendes umfaßt: einen Ladeteil (6, 7, 8, 9 und 12) des tragbaren Apparates, der Ladeanschlüsse (12) beinhaltet und den genannten tragbaren Apparat (11), welcher eine herausnehmbare Akkumulatorbatterie (10) beinhaltet, zum Aufladen der genannten Akkumulatorbatterie (10) aufnimmt; und einen einfachen Ladeteil (6, 7, 8 und 13) der Akkumulatorbatterie, der Ladeanschlüsse (13) beinhaltet und eine einfache Akkumulatorbatterie (10) aufnimmt, die vom Apparatkörper zur Aufladung der genannten einfachen Akkumulatorbatterie getrennt ist; dadurch charakterisiert, daß die Ladeanschlüsse (12) des Ladeteils (6, 7, 8, 9, 12) des tragbaren Apparates und die Ladeanschlüsse (13) des Ladeteils (6, 7, 8, 13) der einfachen Akkumulatorbatterie sich in einem Ladeteilboden (6) des Ladegerätes (4) befinden und auf derselben Ebene angeordnet sind.

2. Ein Ladegerät (4) wie nach Anspruch 1, dadurch charakterisiert, daß es zwei einfache Batterieladeteile (6, 7, 8, 13) beinhaltet.

3. Ein Ladegerät (4) wie nach Anspruch 2, dadurch charakterisiert, daß sich von den einfachen Batterieladeteilen (6, 7, 8, 13) eins auf jeder Seite des Ladeteils (6, 7, 8, 9, 12) des tragbaren Apparates befindet.

4. Ein Ladegerät wie nach einem der vorhergehenden Ansprüche, dadurch charakterisiert, daß der Bodenladeteil (16) einen Aussparungsteil (5) beinhaltet, in dem sich die Ladeanschlüsse (12, 13) befinden, und das Ladegerät (4) so angeordnet ist, daß, wenn ein tragbarer Apparat (11) vom Ladeteil (6, 7, 8, 9, 12) des tragbaren Apparates aufgenommen wird, die Böden des tragbaren Apparates (11) und seiner herausnehmbaren Akkumulatorbatterie (10) zusammen im Ladebodenteil (6) aufgenommen werden.

5. Ein Ladegerät (4) wie nach Anspruch 4, dadurch charakterisiert, daß der Aussparungsteil (5) U-förmig ist und die genannte Ladeausrüstung einen quadratischen Säulenteil (7) enthält, der sich von dem Aussparungsteil (5) nach oben und senkrecht zu diesem erstreckt und mit einem Flansch (8) an einem oberen Teil des Säulenteiles (7) gebildet wird,
wobei der genannte Flansch (8), der genannte quadratische Säulenteil (7) und der genannte Ladebodenteil (6) den genannten Ladeteil (6, 7, 8, 9 und 12) des tragbaren Apparates und den genannten Ladeteil (6, 7, 8 und 13) der einfachen Akkumulatorbatterie ausmachen.

## Revendications

1. Dispositif de charge (4) pour charger un appareil portable (11) contenant une batterie détachable (10), comprenant une partie (6,7,8,9 et 12) de charge d'un appareil portable, qui comprend des bornes de charge (12) et qui reçoit ledit appareil portable (11) contenant une batterie détachable (10), pour charger ladite batterie (10); et une partie (6,7,8 et 13) de charge d'une batterie unique, qui comprend des bornes de charge (13) et qui reçoit une batterie individuelle (10) séparée d'un corps d'un appareil, pour charger ladite batterie individuelle; caractérisé en ce que les bornes de charge (12) de la partie (6,7,8,9,12) de charge de l'appareil portable et les bornes de charge (13) de la partie (6,7,8,13) de charge de la batterie individuelle sont situées dans une partie de base de charge (6) du dispositif de charge (4) et sont disposées dans le même plan.

2. Dispositif de charge (4) selon la revendication (1), caractérisé en ce qu'il comprend deux parties (6,7,8,13) de charge d'une batterie simple.

3. Dispositif de charge (4) selon la revendication 2, caractérisé en ce que les parties (6,7,8,13) de charge de la batterie individuelle sont situées de chaque côté de la partie (6,7,8,9,12) de charge de l'appareil portable.

4. Dispositif de charge selon l'une quelconque des revendications précédentes, caractérisé en ce que la partie de base de charge (16) comprend une partie en renfoncement (5), dans laquelle les bornes de charge (12,13) sont situées, et le dispositif de charge (4) est agencé de telle sorte que, lorsqu'un appareil portable (11) est logé dans la partie de charge (6,7,8,9,12) de l'appareil portable, les fonds de l'appareil portable (11) et de sa batterie détachable (10) sont logés conjointement dans la partie de base de charge (6).

5. Dispositif de charge (4) selon la revendication 4, caractérisé en ce que la partie en renfoncement (5) est en forme de U et ledit équipement de charge comprend une partie en forme de colonne carrée (7) qui s'étend vers le haut à partir de et perpendiculairement par rapport à ladite partie en renfoncement (5) et porte une bride (8), au niveau de la partie supérieure de la partie en forme de colonne (7),
ladite bride (8), ladite partie en forme de colonne carrée (7) et ladite partie de base de charge (6) constituant ladite partie (6,7,8,9 et 12) de charge de l'appareil portable et ladite partie (6,7,8 et 13) de charge de la batterie individiuelle.
